# EUROPÄISCHE PATENTANMELDUNG

(11) **EP 1 077 496 A2**
(43) Veröffentlichungstag der Anmeldung: **21.02.2001**
(21) Anmeldenummer: 00114810.5
(22) Anmeldetag: 11.07.2000
(51) Int. Cl.: H01M 2/02, H01M 2/18, H01M 10/16

(54) **Blei-Säure-Akkumulator**

(30) Priorität: 19.08.1999 DE 19939370
(71) Anmelder: VB Autobatterie GmbH, 30419 Hannover (DE)
(72) Erfinder: Illmann, Joachim, 30827 Garbsen (DE); Richter, Georg, Dr., 31139 Hildesheim (DE); Streuer, Peter, 30559 Hannover (DE); Schellenberg, Peter, 31515 Wunstorf (DE); Pulitzer, Wolfgang, 7091 Breitenbrunn (AT)
(74) Vertreter: Kaiser, Dieter Ralf, Dipl.-Ing.

(57) **Zusammenfassung**

Die Erfindung betrifft einen Blei-Säure-Akkumulator mit positiven und negativen Elektrodenplatten, von denen mindestens die Elektrodenplatten einer Polarität in Separatoren eingetascht und mit dem Boden des Zellengehäuses verklebt sind, bei dem der Boden des Zellengehäuses (1) in Stapelrichtung der Elektrodenplatten angeordnete Kanäle (3) aufweist, die insgesamt eine Breite von 20 bis 50 % des Zellengehäuses (1) besitzen, und bei dem der reibungsfrei in das Zellengehäuse (1) eingebrachte und aus den Elektrodenplatten sowie Separatoren bestehende Plattenblock (2) durch mindestens eine auf einer großen Plattenblockseite anliegende Spannvorrichtung (5,7) festgelegt und eingespannt ist.

## Beschreibung

Die Erfindung betrifft einen Blei-Säure- Akkumulator mit positiven und negativen Elektrodenplatten, von denen mindestens die Elektrodenplatten einer Polarität in Separatoren eingetascht und mit dem Boden des Zellengehäuses verklebt sind.

Aus dem Dokument DE-A 26 12 992 sind Blei-Säure-Akkumulatoren bekannt, bei denen mindestens die Elektrodenplatten einer Polarität sich in taschenförmigen Separatoren befinden, die mit dem Boden des Zellengehäuses verklebt sind. Diese Konstruktion soll insbesondere für 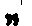 wartungsfreie" Akkumulatoren eingesetzt werden, wobei unter 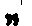 wartungsfreien" Akkumulatoren solche verstanden werden, die aufgrund der Verwendung einer Calzium- und Zinn-haltigen Legierung für die Elektrodengitter während der gesamten Lebensdauer der damit hergestellten Akkumulatoren keiner Ergänzung des Elektrolyten bedürfen. Derartige Akkumulatoren sind im allgemeinen so gestaltet, daß sich die Elektrodenplatten am Boden des Zellengehäuses abstützen, so daß sich oberhalb der Platten zusätzlicher Platz für einen Elektrolytvorrat ergibt. Die Elektrodenplatten befinden sich in oben offenen taschenförmigen Separatoren, die verhindern, daß aus den Elektrodenplatten ausfallende aktive Masse am Boden des Zellengehäuses elektrische Kriechpfade ermöglicht, und somit die Selbstentladungsrate durch Kurzschlüsse zwischen den positiven und negativen Elektrodenplatten erhöht. Bei Akkumulatoren, die unter erschwerten Bedingungen eingesetzt werden, d.h., unter Bedingungen, die hohe mechanische Anforderungen hinsichtlich Vibrations- und Rüttelfestigkeit stellen, wird das aus den positiven und negativen Elektrodenplatten bestehende Elektrodenplattenpaket großflächig mit dem Boden des Zellengehäuses verklebt. Dadurch wird zwar die Rüttelfestigkeit verbessert, gleichzeitig wird jedoch die Elektrolytbeweglichkeit stark eingeschränkt und damit der durch die Lade- und Entladevorgänge bedingten Säureschichtung Vorschub geleistet.

Eine Möglichkeit der Elektrodenblockfestsetzung bei gleichzeitiger Vermeidung einer Säureschichtung besteht im Einsatz sogenannter festgelegter Elektrolyte. Dabei wird die Säure bezüglich ihrer konvektiven Beweglichkeit durch ein Glasfaser-Mikrovlies oder durch die Einbindung in Form eines Geles zwischen den Platten fixiert. Insbesondere im Falle der Glasfaservliese wird dabei ein erheblicher Druck auf die aktive Masse ausgeübt. Die geschilderten Konstruktionsvarianten sind jedoch mit hohen Herstellungskosten verbunden. Die Festsetzung des Elektrodenpakets kann auch dadurch erfolgen, daß der vorgespannte Elektrodenplattenblock in ein Zellengehäuse paßgenau eingeführt wird, welches elastische Eigenschaften besitzt und beispielsweise aus Polypropylen gefertigt wird. Andererseits werden aufgrund der Fertigungstoleranzen bei der Elektrodenplattenherstellung für diesen Zweck auch die beispielweise aus den Dokumenten DE-U 87 11 732 oder US-A 5,384,212 bekannten Spannvorrichtungen eingesetzt. In beiden Fällen ist jedoch bei der Montage des Elektrodenplattenblocks mit Beschädigungen der außenliegenden Elektrodenplatten durch die starke Reibkraft zu rechnen, die bei der Relativbewegung des Plattenblockes zur Zellengehäusewandung bei der Einführung in das Zellengehäuse bzw. bei der Einführung der Spannvorrichtung auftreten.

Die Erfindung hat sich die Aufgabe gestellt, einen Blei-Säure-Akkumulator anzugeben, der eine verbesserte Zyklenbeständigkeit und eine hohe Rüttelfestigkeit aufweist, wobei das Akkumulatorengehäuse eine bessere Steifigkeit besitzt und die freie Elektrolytbeweglichkeit gestattet.

Erfindungsgemäß wird die Aufgabe durch einen gattungsgemäß angegebenen Blei-Säure-Akkumulator mit den Merkmalen gemäß Anspruch 1 gelöst.

Überraschenderweise wurde gefunden, daß die erfindungsgemäß bemessenen Kanäle im Boden des Zellengehäuses sowohl die für Vermeidung einer Säureschichtung notwendige Elektrolytbeweglichkeit gestatten als auch eine für die flächige Verklebung des Elektrodenpakets ausreichende Bodenaufstandsfläche gewährleisten. Die dadurch erhaltene Elektrolytbeweglichkeit führt gegenüber Akkumulatoren ohne Bodenkanäle zu einer Verlängerung der Zyklenlebensdauer. Darüber hinaus wird durch die erfindungsgemäße Abstützung des Elektrodenplattenblocks der reibungsfreie Einbau ermöglicht. Die erfindungsgemäße Spannvorrichtung hält die für die Zyklenstabilität notwendige Pressung des Elektrodenplattenblocks aufrecht.

Weitere vorteilhafte Ausgestaltungen der Erfindung sind in den Ansprüchen 2 bis 6 dargelegt. Danach besitzt der Gehäuseboden ein trapezwellenförmiges Profil, welches die Verwindungsstabilität des Zellengehäuses erhöht, ohne wesentlich mehr Materialeinsatz zu erfordern. Die durch die unteren Halbwellen gebildeten Kanäle gleicher Breite, von denen vorzugsweise jeweils ein Kanal entlang der Seitenränder des Elektrodenplattenblocks verläuft, sichern die freie Beweglichkeit des Elektrolyten, so daß Säureschichtungen vermieden werden. Die erfindungsgemäße Spannvorrichtung wird erst nach ihrer Einführung in das Zellengehäuse in ihre Betriebslage gebracht, indem die dem Elektrodenplattenblock abgewandte Seite relativ zur Zellenwandung verschoben und in dieser Lage fixiert wird. Vorteilhafterweise erfolgt dieses im Falle der Ausbildung der Spannvorrichtung als ein Parallelogramm durch die Verklebung oder Verschweißung der aufgespannten Spannvorrichtung mit der Zellenwandung und im Falle der keilförmigen Spannvorrichtung durch die auf den geneigten Flächen vorgesehenen Rasterungen.

Die Erfindung wird nachfolgend anhand von drei Figuren näher erläutert. Es zeigen:
- Figur 1: den Querschnitt durch ein erfindungsgemäßes Zellengehäuse,
- Figur 2.1: die Anordnung der zweiteiligen Spannvorrichtung im Montagezustand und
- Figur 2.2: im Betriebszustand und
- Figur 3.1: die Anordnung einer parallelogrammförmigen Spannvorrichtung im Montagezustand
- Figur 3.2: und im Betriebszustand

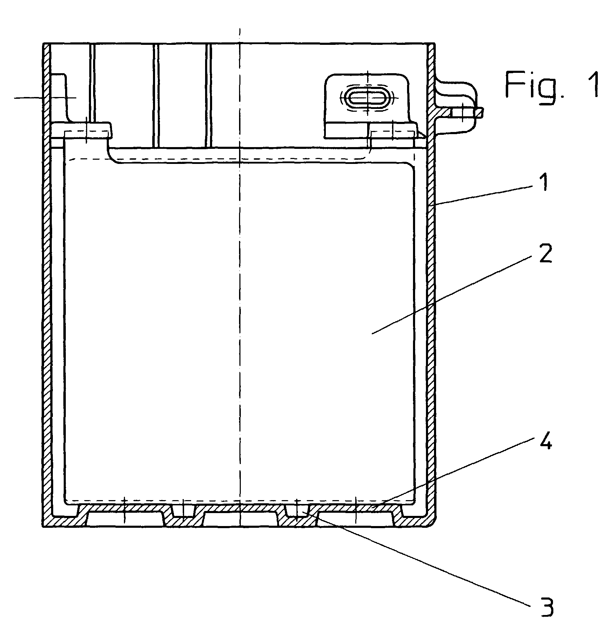

Figur 1 zeigt einen Teilausschnitt eines erfindungsgemäßen Blei-Säure-Akkumulators. Die Wandung des Zellengehäuses 1 besitzt im Bereich des Bodens ein trapezwellenförmiges Profil, bei dem die oberen Halbwellen die Aufstandsflächen 4 für den Elektroplattenblock 2 und die unteren Halbwellen Kanäle 3 zur Aufnahme von freibeweglichen Elektrolyt bilden.

Die Aufstandsflächen 4 ermöglichen die großflächige Verklebung des Elektroplattenblocks 2 mit dem Boden des Zellengehäuses 1. Die Kanäle 3 gestatten die Umspülung des Elektroplattenblocks 2 mit freibeweglichem Elektrolyt, wodurch eine Säureschichtung vermieden wird.

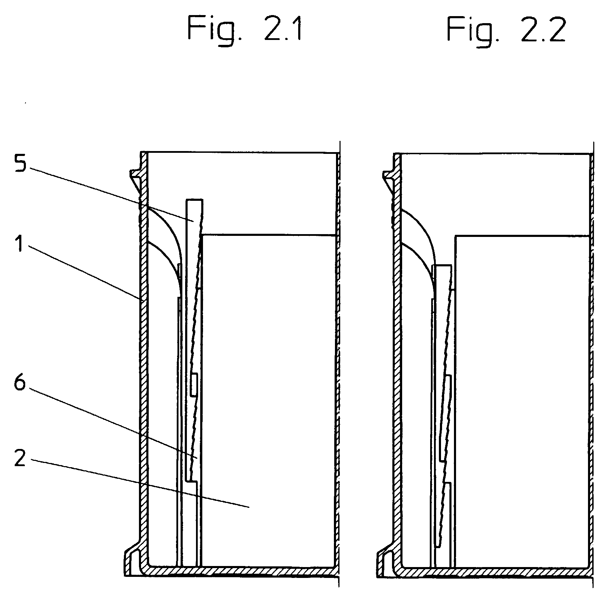

Die Figuren 2.1 und 2.2 zeigen die Anordnung einer zweiteiligen Spannvorrichtung 5 im Montagezustand und im Betriebszustand. Die Spannvorrichtung 5 wird zusammen mit dem Elektroplattenblock 2 in das Zellengehäuse 1 eingebracht und anschließend wird der Teil der Spannvorrichtung 5, der der Wandung des Zellengehäuses zugewandt ist, nach unten verschoben. Die gegenläufigen Schrägen der Spannvorrichtung 5 führen zu einer vergrößerten Gesamtdicke der Spannvorrichtung 5 und damit zu einer Erhöhung des Anpreßdruckes auf den Elektroplattenblock 2. Gleichzeitig erfolgt damit eine zusätzliche Rüttelfestsetzung. Ein Zurückgleiten der Spannvorrichtung 5 und damit eine Verminderung des Anpreßdruckes auf den Elektroplattenblock 2 wird durch die auf den gegenläufigen Schrägen der Spannvorrichtung 5 vorgesehene Rasterung 6 verhindert.

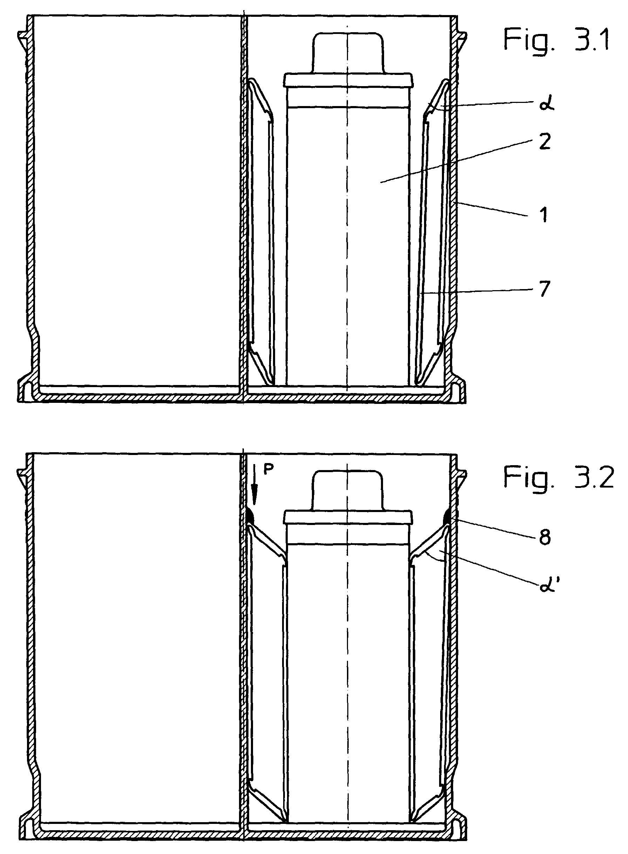

Die Figuren 3.1 und 3.2 zeigen die Anordnung einer parallelogrammförmigen Spannvorrichtung 7 im Montagezustand und im Betriebszustand. Dabei wird die der Wandung des Zellengehäuses 1 zugewandte Seite der Spannvorrichtung 7 in Richtung Zellenboden verschoben, so daß sich der Winkel α auf den Winkel α' vergrößert und nach dem Kniehebelprinzip die Rüttelfestsetzung und den notwendigen Anpreßdruck des Elektroplattenblocks 2 gewährleistet. Eine Fixierung der Spannvorrichtung 7 in der Einbaulage erfolgt durch eine Verklebung oder Verschweißung 8 mit der Wandung des Zellengehäuses 1.

## Patentansprüche

1. Blei-Säure-Akkumulator mit positiven und negativen Elektrodenplatten, von denen mindestens die Elektrodenplatten einer Polarität in Separatoren eingetascht und mit dem Boden des Zellengehäuses verklebt sind, dadurch gekennzeichnet, daß der Boden des Zellengehäuses (1) in Stapelrichtung der Elektrodenplatten angeordnete Kanäle (3) aufweist, die insgesamt eine Breite von 20 bis 50 % des Zellengehäuses (1) besitzen, und daß der reibungsfrei in das Zellengehäuse (1) eingebrachte und aus den Elektrodenplatten sowie Separatoren bestehende Plattenblock (2) durch mindestens eine auf einer großen Plattenblockseite anliegende Spannvorrichtung (5,7) festgelegt und eingespannt ist.

2. Akkumulator nach Anspruch 1, dadurch gekennzeichnet, daß der Zellenboden ein trapezförmig gewelltes Profil besitzt, bei dem die oberen Halbwellen die Aufstandsflächen (4) für den Plattenblock (2) und die unteren Halbwellen die Kanäle (3) bilden, wobei die Amplitude etwa der Wandstärke des Zellengehäuses (1) entspricht.

3. Akkumulator nach Anspruch 1 und/oder 2, dadurch gekennzeichnet, daß alle Kanäle (3) die gleiche Breite aufweisen.

4. Akkumulator nach einem oder mehreren der Ansprüche 1 bis 3, dadurch gekennzeichnet, daß jeweils ein Kanal (3) entlang der Seitenränder der Elektrodenplatten verläuft.

5. Akkumulator nach Anspruch 1, dadurch gekennzeichnet, daß die Spannvorrichtung (7) als Parallelogramm ausgebildet ist, die durch Veränderung des Winkels α in ihrer Dicke variiert und festgelegt sind.

6. Akkumulator nach Anspruch 1, dadurch gekennzeichnet, daß die Spannvorrichtung (5) zweiteilig ausgebildet ist, wobei die einander zugewandten Seiten eine gegenläufige keilförmige Neigung mit Rasterungen (6) besitzen und die anderen großen Seite eben sind.
